# EUROPEAN PATENT SPECIFICATION

(11) **EP 2 956 009 B1**
(45) Date of publication and mention of the grant of the patent: **14.09.2016**
(21) Application number: 14705165.0
(22) Date of filing: 18.02.2014
(51) Int. Cl.: A22C 17/14

(54) **APPARATUS AND PROCESS FOR CUTTING OFF SMALL INTESTINES**
VORRICHTUNG UND VERFAHREN ZUM SCHNEIDEN DES DÜNNDARMS
APPAREIL ET PROCÉDÉ POUR SECTIONNEMENT D'INTESTIN GRÊLE

(30) Priority: 18.02.2013 EP 13155656
(43) Date of publication of application: 23.12.2015
(73) Proprietor: DAT-Schaub A/S, 1711 Copenhagen V (DK)
(72) Inventor: JENSEN, Laurids Kærgaard, DK-4100 Ringsted (DK); RASMUSSEN, Jens L., DK-9460 Brovst (DK); GROTHE, Henrik, DK-2650 Hvidovre (DK); HENRIKSEN, Ole, DK-4000 Roskilde (DK); JENSEN, Sune Vontillius, DK-4440 Mørkøv (DK); JENSEN, Niels R., DK-2900 Hellerup (DK)
(74) Representative: Zacco Denmark A/S
(86) International application number: PCT/EP2014/053105
(87) International publication number: WO 2014/125118

(56) References cited:
- US-A- 2 239 199
- US-A- 4 063 331
- Arne B. Corneliussen: "DAT-Schaub", , 1 April 2013 (2013-04-01), page 1, XP054975154, Retrieved from the Internet: URL:http://vimeo.com/61718608 [retrieved on 2013-06-04]
- Slagterihistorie Roskilde: "Dat Schaub 1983", , 29 December 2011 (2011-12-29), page 1, XP054975155, Retrieved from the Internet: URL:http://www.youtube.com/watch?v=L09nn-x M5us [retrieved on 2013-06-04]

## Description

The present invention relates to an apparatus for cutting off small intestines (jejunum and ileum) and a use of said apparatus.

### Background of the invention

It is known within this line of business to cut off small intestines by:
- first hanging the small intestine over and beyond the edge of a table, while the remainder of the set of intestines sits on the table;
- subsequently moving the small intestine forwards with the one hand at the lower end which is subsequently cut out by means of an ordinary knife or a compressed-air-powered knife held in the other hand;
- using the hand that pulled the small intestines for subsequently arranging the small intestines on a rotary drive wheel;
- holding the ordinary knife or the compressed-air-powered knife loosely in one's hand and positioning it to adjoin the small intestine, wherein said knife has a support blade preventing that the small intestine is perforated by cutting; and
- advancing the small intestines via the rotary drive wheel in the system to the subsequent processing step.

The work of cutting off small intestines is straining to the operator, the operator repeating the process every 18 seconds, and thus cutting off in the order of 200 small intestines per hour. In that process, the vibrations from the air-powered knife may result in the phenomenon called white fingers, where white fingers are a work-related injury exhibiting the symptoms of numbness and coldness in fingers and hands. This work can therefore be considered repetitive strain injurious (RSI) work. Thus, there is a need for improved technology for the process.

US 4 063 331 A discloses an apparatus for cutting off small intestines from an isolated, unprocessed set of intestines and stomach of a mammal. The known apparatus comprises a charge surface, a discharger mechanism, a pull-advance mechanism for pulling a free end of a small intestine to the discharger mechanism and a cutter head, wherein the cutter head is provided on a rack such that said cutter head is movable between a loading and cutting position.

Accordingly, it is an object of the invention to provide an apparatus capable of making the work less straining to the operator. It is also an object of the invention to avoid perforation of the small intestine which may lead to the operator being splashed with the contents of the intestine. Finally, it is an object of the invention to provide an end product of small intestines which is more uniform with the smallest possible fat stripe, and providing a higher quality than the prior art product.

### Summary of the invention

The objects set forth above are met by an apparatus for cutting off small intestines from an isolated, unprocessed set of intestines and stomach of a mammal, the apparatus comprising: a charge surface; a fixation device arranged at an edge of said charge surface, and for fixating a first end of a small intestine; a discharger mechanism; a pull-advance mechanism for pulling a second, free end of a small intestine from a position at the fixation device to the discharger mechanism; where a cutter head and said pull-advance mechanism are provided on a rack such that said cutter head is moveable at least in a direction towards/away from the fixation device.

Hereby it is possible to fixate the small intestines to the one side of the fixation device and the remaining entrails to the other side of the fixation device separated from each other only by the fat which is also designated ruffle fat and which the apparatus is to remove from the small intestines. When the set of intestines is suspended correctly, the pressure device is actuated and the fixation arm moves downwards.

In an embodiment, the cutter head comprises a pair of jaws and a rotating cutter. Thereby, a particularly efficient way of securing a uniform cut-of and with the smallest possible fat stripe is obtained.

In a further embodiment, the movable rack comprises an arm arranged substantially perpendicularly to the fixation device, where the cutter head is arranged at one end of said arm. Preferably, the cutter head can be moved towards/away from said fixation device by automatic or semi-automatic means.

The movable rack may be a telescoping arm, which is movable by an actuator, such as a linear actuator or similar. In any of the above mentioned embodiments the rack may be mounted on a stationary rack which is arranged in the back of apparatus, such that if the charge surface is in the front, the stationary rack is in the back opposite to the charge surface, the fixation device arranged in between, and the rack (arm) being extending forward from the stationary rack towards the fixation device and the charge surface.

In a preferred embodiment the rack is inclined relative to horizontal, so that its free end with the cutter head, closest to the fixation device, is located higher than the end connected to the stationary rack. Thereby, by moving the cutter head towards and away from the fixation device not only the distance to the fixation device is adjusted, but also the relative position of the cutter head in the vertical direction.

In a further embodiment, the rack, e.g. comprising a telescopic arm, is rotatable about a substantially vertical axis of the stationary rack. Thereby it is possible to move the telescopic arm from side to side in addition to in and out. The telescopic arm serves the purpose of enabling correct positioning of the cutter head relative to the small intestine.

According to an embodiment of the invention, the fixation device comprises a stationary lower part and a movable upper part cooperating with the lower part. the lower part and the movable upper part may be fixated to each other by means of an actuator, such as a pressure device. The movable upper part may be provided with serrations on the part that cooperates with (faces) the lower part. Thereby, it is possible to further enhance the fixation of the entrails to the effect that both parts of the entrails remain immobilised at their respective sides of the fixation device.

In a further embodiment, the lower part of the fixation device may additionally be provided with a cutter intended for disengaging the small intestine from the stomach. Thereby it is possible to cut the small intestine out of the ruffle fat at a uniform distance which is optimally to be as short as possible, while simultaneously being so long that a perforation of the small intestine does not occur.

According to a further embodiment, the pull-advance mechanism comprises two cylindrical toothed wheels arranged on parallelly arranged axles, the toothed wheels arranged to engage with one another, the first toothed wheel being driven by a motor, and the second toothed wheel running freely. Thereby it is possible to provide a mechanism which is capable of ensuring a uniform, automated pull-advance movement of the soft-tissue parts.

In an embodiment, a gap is provided between the jaws.

In a preferred embodiment the gap provides a distance in the inlet of the gap of 1.2 mm between the jaws, and a distance in the outlet of 0.9 mm. Thereby it is possible to facilitate the insertion of the ruffle fat between the jaws, while simultaneously the distance ensures that the fat slides freely through the gap between the jaws.

In a further embodiment, the apparatus may additionally be provided with a large-intestine rake arranged on the opposite side of the fixation device seen relative to the movable rack. The large intestine rake is preferably fully automated. Thereby it is possible to tear the large intestine from the ruffle fat when the cutting off is completed.

In an aspect, the invention further provides a cutting off station. The apparatus described above may form part of a cutting-off station comprising two mirrored apparatuses separated by an operator platform. Thereby it is possible for an operator to operate two apparatuses to the effect that the operator initiates the cutting-off procedure on the one apparatus, following which the operator initiates the cutting-off on the other apparatus and vice versa.

In a further aspect, the invention concerns the use of the apparatus use of the apparatus for cutting off small intestines, wherein the apparatus comprises a charge surface with a fixation device according to any one of the preferred embodiments, the apparatus is employed for use in connection with processing or measuring soft-tissue parts. According to a further use, the pull-advance mechanism is used for soft-tissue parts in the form of small intestines (jejunum and ileum) from mammals.

In a further aspect, the invention provides a process for cutting off and processing small intestines.

Further, advantageous embodiments are described in the following detailed part of the description.

### Brief description of the drawings

In the following detailed portion of the present description, the invention will be explained in more detail with reference to the exemplary embodiments shown in the drawings, in which:
- Figure 1, in a perspective view, shows an apparatus according to the invention;
- Figure 2, in a perspective view, shows a movable rack of the apparatus shown in Fig. 1;
- Figure 3, in a side view, shows a cutter head being part of the movable rack shown in Fig. 2;
- Figure 4, in a rear view, shows a fixation device of the apparatus shown in Fig. 1;
- Figure 5, in a perspective view, shows details of a pull-advance mechanism being part of the apparatus;
- Figure 6, in a perspective view, shows details of the cutter head;
- Figure 7, in another perspective view, shows details of a jaw mechanism and a rotating cutter of an embodiment of a cutter head, and
- Figure 8, in a perspective view, shows a cutting-off station, comprising two apparatuses as shown in Fig. 1 and Fig. 2.

### Detailed description of the invention

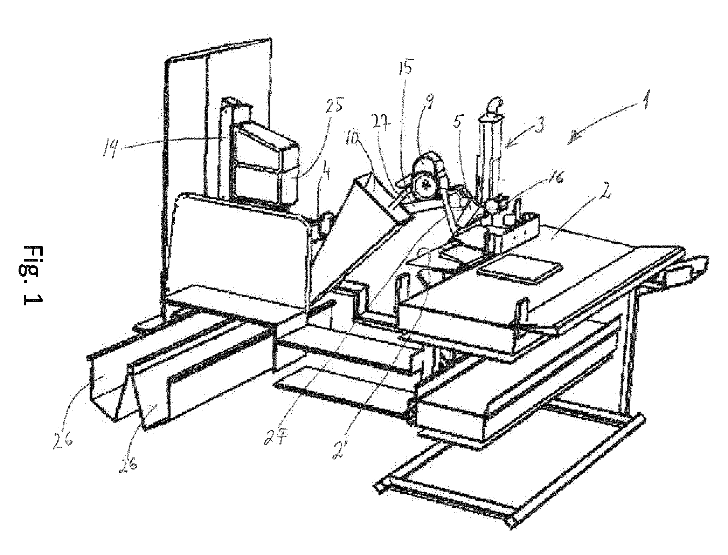

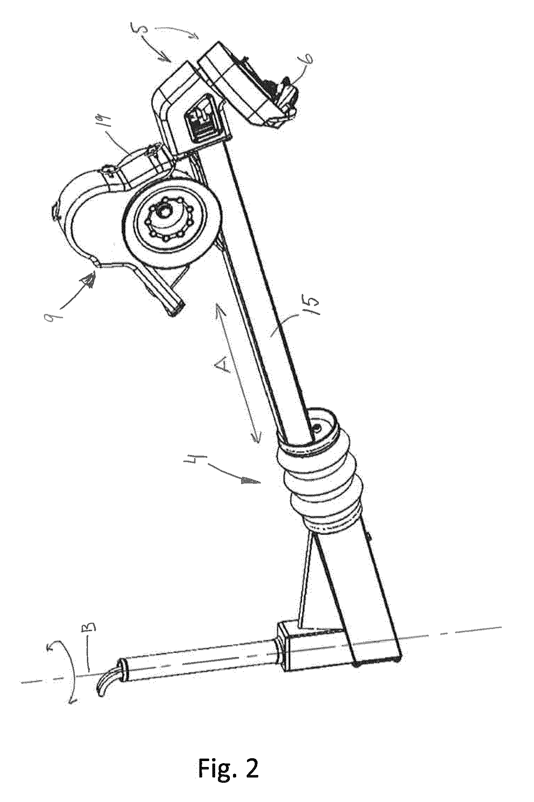

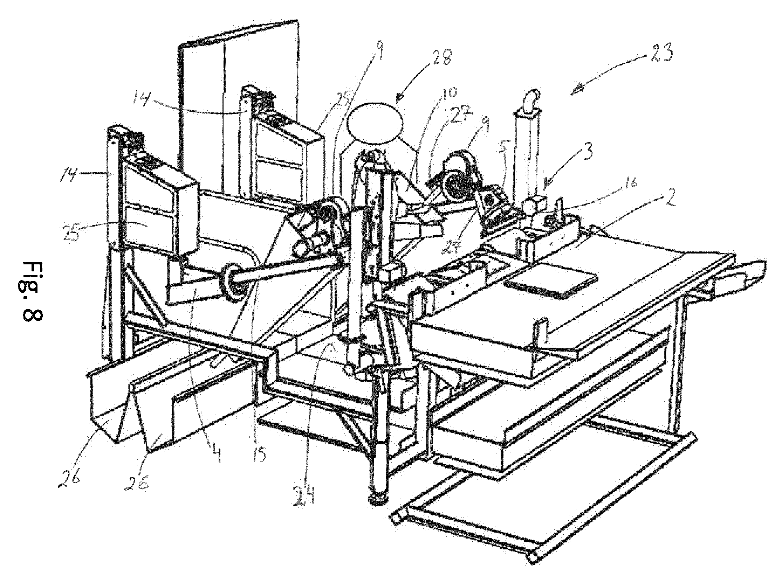

An apparatus for cutting off small intestines according to the invention is shown in figure 1, individual units of the invention are shown in the subsequent figures 2-7, and, finally, figure 8 shows an apparatus for cutting off small intestines according to the invention as a part of a cutting-off station.

The main features of the work processes to which a set of intestines is to be subjected to enable cutting off of a small intestine 27 will be described in the context of describing the figures.

To indicate the scale of dimensions of the constituent parts of the apparatus according to the invention, and an operator of average size, a schematic "operator" indicated by reference numeral 28 has been inserted in figure 8 irrespective of the fact that the operator is not part of the invention.

As will appear from figures 1 and 8, the apparatus 1 for cutting off small intestines 27 comprises a charge space, in the form of a charge surface 2 which is where the unprocessed sets of intestines enter the apparatus 1. At the charge surface 2, the set of intestines is arranged in such a way that the set of intestine is pulled over and beyond an edge 2' of the charge surface 2 to the effect that the small intestine 27 faces towards the operator 28 (not shown in figure 1, see Fig. 8). The deployment is to be such that the set of intestines is as straightened as possible and that the lower line of the set of intestines, hanging over the edge 2', is a as horizontal as possible.

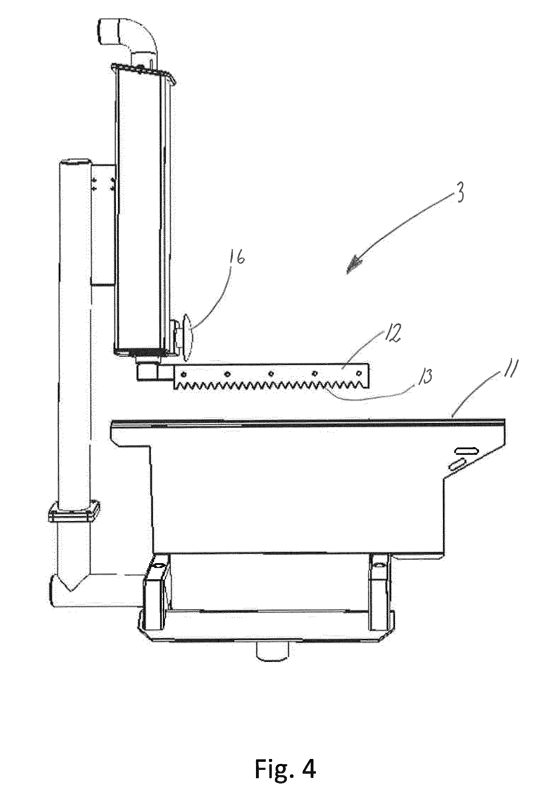

The apparatus further comprises a fixation device 3, the details of which are shown in figure 4.

A set of intestines to be cut off is spread out on the charge surface 2, while it is conveyed below a movable upper part 12 of the fixation device 3, and when the set of intestines is arranged correctly, the movable upper part 12 of the fixation device 3 is activated to fixate the intestines against a stationary lower part 11 of the fixation device 3. The, movable upper part 12 may be activated by activating an actuator, such as a pressure device 16, thus providing a semi-automated fixation of the intestines. In other embodiments (not shown), the fixation may be activated in other ways, e.g. fully automated, e.g. by sensors being activated by the presence the intestines in the correct position. The movable upper part 12 of the fixation device 3 moves downwards and retains the set of intestines between the movable upper part 12 and a fixed lower part 11, which is preferably a part of the charge surface 2 e.g. the edge 2' thereof facing the operator 28.

In other embodiments (not shown), the intestines may be fixated in other ways, e.g. by pushing the intestines under a brace (not shown) being formed along the edge 2' of the charge surface (charge space) 2.

The cutting out procedure consists in that the small intestine 27 is cut through and separated manually at a distance of about 50 cm from the stomach end of the intestine, but it may be necessary to perform further cutting out, e.g. in case the ruffle fat is split.

As will appear from figures 1 and 8, the apparatus 1 of the invention is provided with a rack 4. The rack 4 (or movable rack 4) is mounted on a stationary rack 14. The stationary rack 14 is located behind the operator 28 (see Fig. 8), if the charge surface is defined as being in the front. The rack 4 extends forward from the stationary rack 14, towards the fixation device 3, and substantially at a right angle to the edge 2' of the charge surface 2.

Details of the rack 4 are shown in figure 2. The rack 4 is movable towards/away from the fixation device 3 by means of an actuator 25, which may be a hydraulic or pneumatic device, e.g. an air servo.

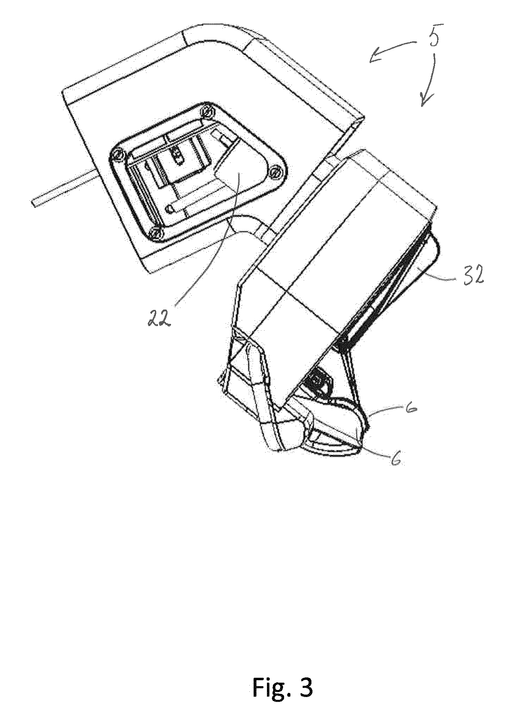

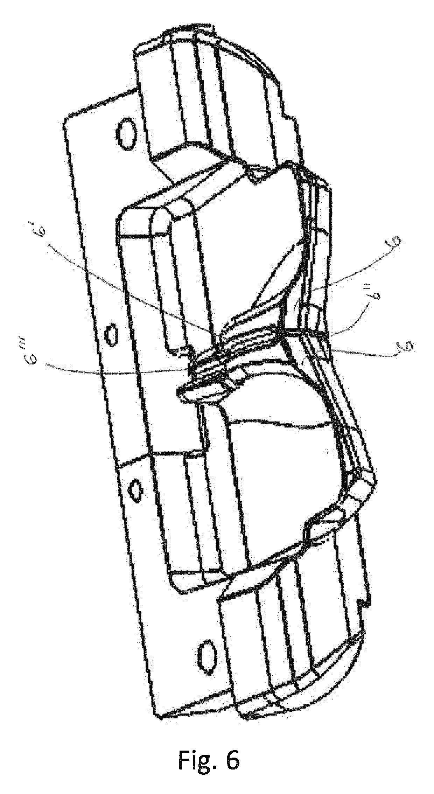

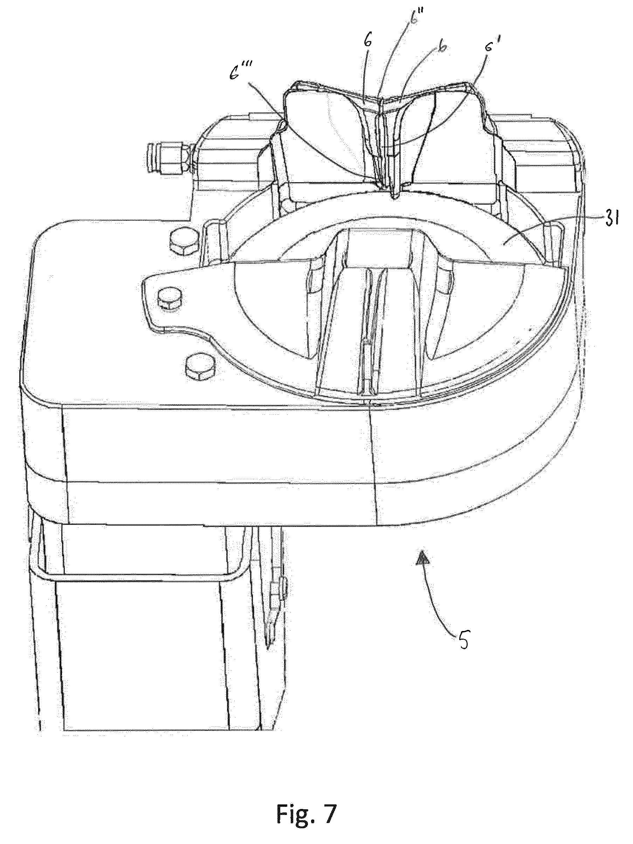

A cutter head 5 is provided on said movable rack 4, (the details will appear most clearly from figures 2 and 3), on a free end opposite the end mounted on stationary rack 14. The cutter head 5 comprises a number of jaws 6 (the details will appear most clearly from Figs. 6 and 7, see further below). The stomach end of the small intestine 27 is conveyed from the fixation device 3 past the cutter head 5 to the effect that the ruffle fat is caused to enter between the jaws 6, while the small intestine 27 extends on the outside of the jaws 6.

On the movable rack 4, a pull-advance mechanism 9 is further provided comprising a first toothed wheel 17 with a guide plate 29. Following conveyance of the small intestine 27 past the cutter head 5 and on the outside of the jaws 6, the small intestine 27 is subsequently arranged on the guide plate 29 on the first toothed wheel 17, following which the cutting-off procedure starts.

The guide plate 29 ensures that the small intestine is correctly inserted into the pull-advance mechanism 9.

On the apparatus 1, a discharger mechanism 10 is further provided serving the purpose of conveying the small intestine 27 from the pull-advance mechanism 9 to one of two discharge passages 26, which are where the cut-off small intestines 27 exit the apparatus 1. The discharger mechanism 10 is formed by a funnel extending from the back of the apparatus 1, with and outlet into the discharge passage 26, towards the fixation device 3, and arranged substantially in parallel with the rack 4. The discharger mechanism 10 has an inlet opening facing towards the pull-advance mechanism 9.

When about half of the small intestine 27 has travelled through the pull-advance mechanism 9, the discharger mechanism 10, having a pivotal stud or spout (not shown) at the outlet end, will change position to the effect that the pivotal stud or spout switches from the one discharge passage 26 to the other discharge passage 26, meaning that the two halves of the small intestine 27 are caused to enter into each their discharge passage 26. Thus function is fully automated and controlled by a length counter (not shown) arranged on the pull-advance mechanism 9 (based e.g. on the number of rotations of the wheel 17).

When the cutting off of a small intestine is complete, a large-intestine rake (not shown) perforates the ruffle fat being behind the fixation device 3 (as seen relative to the charge surface 2). This may be a manual function or a semi- or a fully automated function, and the rake moves away from the operator 28 to the effect that the rake tears the large intestine off the ruffle fat. The part of the set of intestines that comprises the large intestine is conveyed down onto a belt below the charge surface 2, and when the fixation device 3 opens to release the small intestine, the ruffle fat is sucked away through a slot (not shown) in a tray in front of the charge surface 2.

Figure 2 shows the movable rack 4 in a preferred embodiment as a telescopic arm 15 which e.g. may be servo-controlled. The telescopic arm 15 is capable of moving the cutter head 5 away from and toward the stationary rack 14 and from side to side. The side to side movement may be necessary in order to be able to locate the cutter head 5 correctly relative to the small intestine 27. The telescopic arm 15 has an elongate axis A. The elongate axis A preferably is formed in an angle relative to a horizontal plane, such that arm 15 has a lower end where it is connected to stationary rack 14, and such that other end with the cutter head is located above the level where it the arm 15 is connected to the stationary rack 14. A non right-angled, thus oblique angle of the telescopic arm 15 in respect of the charge surface (horizontal plane) enables a simultaneous movement in the vertical plane as well as in the horizontal plane.

The side to side movement of the arm 15 (with the cutter head 5) is provided by the arm 15 being rotationally connected to the stationary rack 14, about a vertically oriented axis B. The rotational motion is preferably controlled by another servo mechanism, e.g. an air servo.

Combined with the rotation about a vertical axis, a movement of the cutter head in three directions is accomplished, both vertically and horizontally.

Preferably, the telescopic arm 15 is under constant super-atmospheric pressure in order to keep the internal components dry.

The actuator 25 that moves the telescopic arm 15 is arranged in the lowermost part of the movable rack 4, i.e. the part closest to the stationary rack 14.

The movable rack 4 also serves as base for a pull-advance system 9 shown in figures 1 and 8, and it controls a supply of water through the rack 4 to faces in contact with small intestines, i.e. especially the rotatable cutter and the jaws 6.

Figure 3 shows the cutter head 5 that comprises a set of releasable jaws 6 (the details are shown in Figs. 6 and 7), wherein the jaws 6 convey the small intestine 27 past a rotating cutter 31 in the cutter head 5. On the sides of the jaws 6 sensors (not shown) are provided that are capable of detecting differences in the light refraction when it passes through fat/intestine. The sensors are connected to a control unit (not shown), and in this way the control unit is capable of determining the location of the interface between fat and intestine, based on signals from the sensors, and thereby to control the operation of the cutter head 5. The signals from the sensors are used to control the movement of the cutter head 5 back and forth via the movable rack 4.

The jaws 6 are releasable from the cutter head 5 and adjustably formed therein. An adjustable gap 6' is formed between the jaws 6. The size of the gap 6' located between the jaws 6 being of decisive significance to the functioning of the apparatus 1 and which therefore needs to be checked at regular intervals. At the lower part, meaning in this context the part of the jaws 6 that is nearest to the small intestine location 27, the distance should be about 1 to 1.5 mm, e.g. about 1.2 mm and, at the top, distant from the small intestine location 27, the distance should be about 0.8 to 1 mm, e.g. about 0.9 mm, in order for the cutter head 5 to function optimally.

On the undersurface or lower surface of the cutter head 5, meaning in this context the side where the jaws 6 are arranged, a removable lid 32 is provided. The lid 32 serves the dual purpose of protecting against inadvertent contact with the knife 31 of the cutter head 5 and ensuring that water can hit both the knife 31 of the cutter head 5 and the small intestine 27.

Water serves a lubricating function when the apparatus is operating, and ensures that the fat slides freely through the gap 6' located between the jaws 6. Water is supplied via not shown nozzles in cutter head 5. The removable lid 32 also makes sure that the water hits and washes the knife 31, and thereby prevents fat deposits from accumulating on the blade of the knife 31.

In the cutter head 5, a motor 22 is provided, and the motor 22 may, e.g. by means of a belt drive, drive the knife of the cutter head 5 which is, in one embodiment, of the rotating kind, i.e. a rotating cutter 31 as shown in Fig 7.

The construction of the cutter head 5 makes it possible to cut off the ruffle fat at a more accurate distance from the small intestine 27 and so close to the small intestine 27 that shreds and the like are minimised. Besides, a longer average length of the end product of small intestines 27 is accomplished.

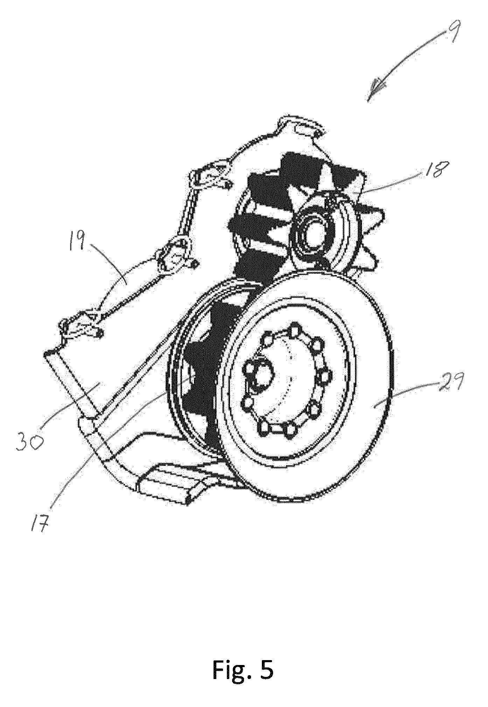

Figure 4 shows the fixation device 3 in greater detail than in Figs 1 or 8. The fixation device 3 comprises a fixed lower part 11 and a movable upper part 12, wherein, on the side of the movable upper part 12 that is intended for facing towards the fixed lower part 11, serrations 13 may be provided in some embodiments. The fixation device 3 functions in that the operator 28 (not shown) actuates the semi-automated pressure device 16 which, in one embodiment, is located in immediate succession of the fixed end of the movable upper part 12, thereby achieving better fixation. The fixation device 3 opens automatically as will be described in further detail below in the context of figure 5.

The pull-advance mechanism 9 comprises one or more wheels 17, 18.

Figure 5 shows one embodiment of the pull-advance mechanism 9 having two wheels 17, 18. In Fig. 5 the pull-advance mechanism 9 is shown without a shield/cover. The wheels 17, 18 are mounted, a bracket 30. The wheels preferably, and as shown in Fig. 5, comprises a first cylindrical toothed wheel 17 with external toothing and a second cylindrical toothed wheel 18 - also with external toothing. A pull-advance mechanism 9 with two wheels provides a more even pull and also provide a more compact mechanism. However, in other embodiments (not shown), the pull-advance mechanism 9 may comprise only one wheel. Also, in other embodiments (not shown) the wheel or wheels may not be toothed. Instead they may be provided with suitable surface properties to advance the small intestine, e.g. a grating.

The pull-advance mechanism 9 may have means (not shown) for regulating the centre-to-centre distance between the two toothed wheels 17, 18 (i.e. the distance between the parallel rotation axes of the wheels 17, 18) that enables setting and adjustment of the centre-to-centre distance between the first toothed wheel 17 and the second toothed wheel 18.

The pull-advance mechanism 9 may also function without such means for regulating the centre-to-centre distance between the two toothed wheels 17, 18, but in that case it is inherently not possible to set and adjust the centre-to-centre distance between the first toothed wheel 17 and the second toothed wheel 18.

When the centre-to-centre distance is set correctly, it is thus possible to obtain the desired effect, where the small intestine 27 is capable of travelling between the first toothed wheel 17 and the second toothed wheel 18 without being damaged.

The centre-to-centre distance between the first toothed wheel 17 and the second toothed wheel 18 is closer to the largest possible centre-to-centre distance having the smallest possible degree of engagement/profile overlap than the theoretically smallest possible centre-to-centre distance between the first toothed wheel 17 and the second toothed wheel 18 having the largest possible degree of engagement. A larger centre-to-centre distance and hence a smaller degree of engagement minimises the risk of the small intestines 27 being damaged.

A motor 19, is also mounted on the bracket 30. The motor 19 drives the pull-advance mechanism 9. The motor 19 may be either directly connected to the first toothed wheel 17, or the motor 19 may be indirectly connected to the first toothed wheel 17, e.g. by means of a toothed gearing.

The second toothed wheel 18 may be arranged to be free running. Thereby it may be driven by the first toothed wheel 17. Irrespective of the way in which the motor 19 and the first toothed wheel 17 are connected, it entails that the first toothed wheel 17 becomes the driving toothed wheel of the pull-advance mechanism 9. The second toothed wheel 18 thereby becomes the following toothed wheel, driven by the first toothed wheel 17. In some embodiments the first toothed wheel 17 could acts as the following toothed wheel driven by the second toothed wheel 18. In yet other embodiments both wheels may be driven by suitable gearing.

The axis (rotational axis) of the first toothed wheel 17 and the axis (rotational axis) of the second toothed wheel 18 are arranged in parallel to each other. When the axes are in parallel, the first toothed wheel 17 and the second toothed wheel 18 thus have a mutual and uniform engagement. The engagement will thus remain unchanged, no matter how the toothed wheels are located relative to each other and irrespective of the number of toothed wheel revolutions.

The first toothed wheel 17 and the second toothed wheel 18 being in one embodiment straight-toothed toothed wheels, a uniform engagement is thus also ensured across the entire tooth width for the entire engagement of the tooth profile.

In one embodiment of the invention, the first toothed wheel 17 and the second toothed wheel 18 has different tooth profiles. The tooth profile of the first toothed wheel 17 has a pitch where the period to amplitude ratio is higher than that of the tooth profile of the second toothed wheel 18. By this embodiment an even pull is obtained, which locks the mechanism and pulls optimally.

Other tooth profiles having other pitches where the period to amplitude ratio is different from the one described in this embodiment described here will also be combinatorial options that are available to a person skilled in the art. However, the embodiment described has been found to be very suitable for small intestines 27.

With a pitch where the period to amplitude ratio is higher for the first toothed wheel 17 than the period to amplitude ratio of the second toothed wheel 18, the radius of curvature of the first tooth wheel's 17 tooth shape thereby also becomes smaller than the radius of curvature of the second tooth wheel's 17 tooth shape, whereby the system is evenly locked.

The pull-advance mechanism 9 may have a brake (not shown) connected to the second toothed wheel 18 which may ensure friction and hence the retainment of the elongate soft-tissue parts between the first toothed wheel 17 and the second toothed wheel 18 is provided. Such braking device may, in particular in case of a large centre-to-centre distance between the first toothed wheel 17 and the second toothed wheel 18, be adequate to ensure that the small intestines 27 are pulled forwards.

Another measure which may contribute to ensuring, in case of a large centre-to-centre distance between the first toothed wheel 17 and the second toothed wheel 18, that the small intestines 27 are pulled forwards, is a friction-creating surface structure on the surfaces of the toothed wheels. Such friction-creating surface structure could e.g. be a knurling on both the first toothed wheel 17 and the second toothed wheel 18.

In one embodiment, the friction-creating surface structure should be on the second toothed wheel 18 when it is the toothed wheel which is not driven and hence has a braking function.

A centre-to-centre distance between the first toothed wheel 17 and the second toothed wheel 18 of about 150 - 110 mm, such as about 140 - 120 mm, e.g. about 130 mm, will in most cases be suitable.

With an external diameter of about 150 - 110 mm, such as about 140 - 120 mm, e.g. about 130 mm, the first toothed wheel 17 and the second toothed wheel 18 have been found to have a suitable size on the one hand in respect of the operation of the pull-advance mechanism 9 and, on the other, in respect of the space occupied by the pull-advance mechanism 9 on the site of use.

Besides, it has been found that when the first toothed wheel 17 and the second toothed wheel 18 have the same external diameter and the same number of teeth selected as a number of teeth of 5 - 13, such as 7 - 11, e.g. 9, function optimally in use.

Thus, the pull-advance mechanism 9 provides the option of many possible combinations within the given intervals, where it will be possible e.g. to scale the diameters to a desired dimension. However, it will be obvious to a person skilled in the art that there are combination options outside these intervals.

A guide shield 29 (also called guide plate 29) is provided on one side of the first toothed wheel 17. The guide shield 29 is in the form of a plate having the shape of a conical surface, and with an axis that coincides with the axis of the toothed wheel 17. The guide shield 29 is adapted for guiding the small intestine towards the tooth wheel 17. The guide shield 29 has a half apex angle in relation to the axis of the wheel 17 of about 20° - 40°, such as about 25° - 35°, and e.g. about 30°.

It is common to the angle intervals of the guide shield 29 that they make it easier for the operator 28 to make the small intestines 27 enter into engagement with the pull-advance mechanism 9, the conical surface of said guide shield 29 making the small intestines 27 slide into position between the first toothed wheel 17 and the second toothed wheel 18. Again, those interval options give rise to a number of combination options to suit various wishes and needs. Here, it will also be obvious to a person skilled in the art that combination options exist outside those intervals.

A trigger (not shown) is mounted on the second toothed wheel 18, the trigger enabling a revolution sensor (not shown) mounted on the bracket 30 to register the number of revolutions of the second toothed wheel 18. Thus, this device makes it possible to check whether the pull-advance mechanism 9 has the desired speed. As mentioned above, it is also possible to determine the length of small intestine having passed over the wheels 17, 18.

When a load is imposed on the pull-advance mechanism 9 due to a small intestine 27 entering the pull-advance mechanism 9, a counter/revolution sensor (not shown) begins to count revolutions on the second toothed wheel 18 in the pull-advance mechanism 9. Following a number of revolutions corresponding to a predetermined length of small intestine 27 (such as half the length), e.g. about 11 meters of small intestine, the discharger mechanism 10 changes position to the effect that the intestine 27 is conveyed into the second discharge passage 26.

When the motor 19 is no longer loaded and the predetermined length of small intestine 27 has been reached, the fixation device 3 will open.

Figure 6 shows the jaws 6 of the cutter head 5 in one embodiment of the invention, wherein, between the jaws 6, there is a gap with a distance in the inlet 6" of about 1-1.5 mm, e.g. about 1.2 mm and a distance in the outlet 6"' of about 0.8-1 mm, e.g. about 0.9 mm. The front side of the jaws controls the movement of the intestine during and after the cutting-off procedure. The rear side controls the movement of the fat following the cutting-off procedure. Finally, the jaws control the distance from the intestines at which the fat is cut away.

Fig. 7 shows how the jaws and a knife in the form of a rotating cutter 31 is interrelated to cut fat from the small intestine 27.

Figure 8 shows a cutting-off station 23 having two apparatus 1 according to the invention. The cutting-off station 23 comprises an operator platform 24 arranged between the two apparatuses 1. According to an embodiment, the platform 24 is adjustable in height such that an optimal distance from the charge surface may be obtained, and such that an ergonomic relation is obtained between the charge surface 2 and the forearm of the operator 28. The construction of the cutting-off station 23 with two mirrored apparatuses 1 to each side of the operator's 28 work space makes it possible for the operator 28 to operate two apparatuses alternately.

Although the teaching of this application has been described in detail for purpose of illustration, it is understood that such detail is solely for that purpose, and variations can be made therein by those skilled in the art without departing from the scope of the teaching of this application.

The term "comprising" as used in the claims does not exclude other elements or steps. The term "a" or "an" as used in the claims does not exclude a plurality. The single processor or other unit may fulfill the functions of several means recited in the claims.

## Claims

1. An apparatus (1) for cutting off small intestines (27) from an isolated, unprocessed set of intestines and stomach of a mammal, the apparatus (1) comprising:
- a charge surface (2);
- a fixation device (3) arranged at an edge (2') of said charge surface (2) and for fixating a first end of a small intestine (27);
- a discharger mechanism (10);
- a pull-advance mechanism (9) for pulling a second, free end of a small intestine from a position at the fixation device (3) to the discharger mechanism (10);
- and a cutter head (5), wherein the cutter head (5) and said pull-advance mechanism (9) are provided on a rack (4) such that said cutter head (5) is moveable at least in a direction towards/away from the fixation device (3).

2. An apparatus (1) according to claim 1, wherein said cutter head (5) comprises a pair of jaws (6) and a rotating cutter.

3. An apparatus (1) according to claim 1 or 2, wherein said fixation device (3) comprises a stationary lower part (11) and a movable upper part (12) cooperating with the lower part (11) and an actuator for pressing the movable upper part (12) towards the lower part (11).

4. An apparatus according to claim 3, wherein serrations (13) are provided on said movable upper part (12) on a part facing said stationary lower part (11).

5. An apparatus according to any one of claims 1-4, wherein said movable rack (4) comprises an arm (15) arranged substantially perpendicularly to the fixation device (3), said cutter head (5) being arranged at one end of said arm (15).

6. An apparatus according to any one of claims 1-6 wherein said fixation device (3) is provided with a cutter for disengaging the small intestine (27) from the stomach.

7. An apparatus according to any one of claims 1-6, wherein said cutter head (5) can be moved towards/away from said fixation device (3) by automatic or semi-automatic means.

8. An apparatus according claim 7, wherein said movable rack (4) is a telescopic arm (15) which is movable by an actuator (25), and wherein the telescopic arm (15) is mounted on a stationary rack.

9. An apparatus according to claim 8, wherein said telescopic arm (15) is inclined relative to the horizontal, and its free end is highest and closest to the fixation device (3).

10. An apparatus according to claim 8 or 9, wherein the telescopic arm (15) is rotatable about a substantially vertical axis of the stationary rack.

11. An apparatus according to any one of claims 1-10, wherein said pull-advance mechanism (9) comprises two toothed wheels (17, 18), with parallel axes of rotation, said toothed wheels (17, 18) engaging one another, and wherein the first toothed wheel (17) is driven by a motor (19), and wherein the second toothed wheel (18) runs freely, or vice versa.

12. An apparatus according to any one of claims 2-11, wherein there is a gap (6') between said jaws (6) with a distance in the inlet (6") of about 1-1.5 mm, e.g. about 1.2 mm, and a distance in the outlet (6"') of about 0.8-1 mm, e.g. about 0.9 mm.

13. Apparatus according to any one of claims 1-12, further comprising a large-intestine rake (20) arranged on the opposite side of the fixation device (3) seen relative to the movable rack (4).

14. A cutting-off station (23) comprising at least two apparatuses (1) according to any one of claims 1-13, wherein said cutting-off station (23) comprises an operator platform (24), and where the rack (4) and pull-advance mechanisms (9) are mirrored on both sides of said operator platform (24).

15. A use of an apparatus (1) according to any one of claims 1-12 for processing or measuring soft-tissue parts, such as small intestines (jejunum and ileum) from mammals.

16. A process for cutting off and processing small intestines (jejunum and ileum) from an isolated, unprocessed set of intestines and stomach of a mammal, comprising the steps of
a) arranging the set of intestines to be cut off and processed at the charge surface (2) of an apparatus (1) according to any of the claims 1-13 in such a way that the set of intestines is pulled over and beyond the edge of the charge surface 2 to the effect that the small intestine (27) faces towards an operator (28) of the apparatus (1) and the stomach end faces away from said operator (28),
b) conveying the set of intestines below a movable upper part (12) of a fixation device (3) of said apparatus (1), and actuating, when the set of intestines is deployed correctly, the movable upper part (12) to fixate said stomach end of the small intestine (27) against a lower part (11) of said fixation device (3),
c) cutting through and separating said small intestine (27) from the stomach end of the intestine,
d) conveying a free end of the small intestine (27) from said fixation device (3) past a cutter head (5) of said apparatus (1) to a pull-advance mechanism (9)a of the apparatus (1), whereby the cut-off procedure is started, and
e) conveying the free end of the cut-off small intestines to a discharge mechanism (10) of said apparatus (1).

## Patentansprüche

1. Vorrichtung (1) zum Abtrennen des Dünndarms (27) von einer isolierten, unverarbeiteten Menge aus Darm und Magen eines Säugetiers, wobei die Vorrichtung (1) Folgendes umfasst:
- eine Beschickungsfläche (2);
- eine Fixiervorrichtung (3), die an einem Rand (2') der Beschickungsfläche (2) angeordnet und zur Fixierung des ersten Endes des Dünndarms (27) vorgesehen ist;
- einen Abwurfmechanismus (10);
- einen Zug- und Vorschubmechanismus (9) zum Ziehen eines zweiten, freien Endes des Dünndarms von einer Position an der Fixiervorrichtung (3) zum Abwurfmechanismus (10);
- und einen Messerkopf (5), wobei der Messerkopf (5) und der Zug- und Vorschubmechanismus (9) derart auf einem Träger (4) vorgesehen sind, dass der Messerkopf (5) mindestens in einer Richtung zur Fixiervorrichtung (3) hin/von dieser weg bewegt werden kann.

2. Vorrichtung (1) nach Anspruch 1, wobei der Messerkopf (5) ein Paar Klemmbacken (6) und ein drehendes Messer umfasst.

3. Vorrichtung (1) nach Anspruch 1 oder 2, wobei die Fixiervorrichtung (3) einen ortsfesten unteren Teil (11) und einen mit dem unteren Teil (11) zusammenwirkenden, beweglichen oberen Teil (12) und einen Stellantrieb umfasst, der den beweglichen oberen Teil (12) gegen den unteren Teil (11) drückt.

4. Vorrichtung nach Anspruch 3, wobei an dem beweglichen Teil (12) auf der dem ortsfesten unteren Teil (11) zugewandten Seite Zahnprofile (13) bereitgestellt sind.

5. Vorrichtung nach einem der Ansprüche 1 bis 4, wobei der bewegliche Träger (4) einen Arm (15) umfasst, der im Wesentlichen senkrecht zu der Fixiervorrichtung (3) angeordnet ist, wobei der Messerkopf (5) an einem Ende des Arms (15) angeordnet ist.

6. Vorrichtung nach einem der Ansprüche 1 bis 6, wobei die Fixiervorrichtung (3) mit einem Messer zum Trennen des Dünndarms (27) vom Magen ausgestattet ist.

7. Vorrichtung nach einem der Ansprüche 1 bis 6, wobei der Messerkopf (5) durch automatische oder halbautomatische Mittel zu der Fixiervorrichtung (3) hin/von ihr weg bewegt werden kann.

8. Vorrichtung nach Anspruch 7, wobei der bewegliche Träger (4) ein Teleskoparm (15) ist, der durch einen Stellantrieb (25) bewegt werden kann, und wobei der Teleskoparm (15) auf einem ortsfesten Träger montiert ist.

9. Vorrichtung nach Anspruch 8, wobei der Teleskoparm (15) zur Horizontalen hin geneigt ist und sein freies Ende am höchsten und der Fixiervorrichtung (3) am nächsten liegt.

10. Vorrichtung nach Anspruch 8 oder 9, wobei der Teleskoparm (15) um eine im Wesentlichen senkrechte Achse des ortsfesten Trägers drehbar ist.

11. Vorrichtung nach einem der Ansprüche 1 bis 10, wobei der Zug- und Vorschubmechanismus (9) zwei Zahnräder (17, 18) mit parallelen Drehachsen umfasst, wobei die Zahnräder (17, 18) ineinander greifen und wobei das erste Zahnrad (17) von einem Motor (19) angetrieben wird und wobei das zweite Zahnrad (18) freiläuft oder umgekehrt.

12. Vorrichtung nach einem der Ansprüche 2 bis 11, wobei sich zwischen den Klemmbacken (6) ein Spalt (6') mit einem Abstand am Eintritt (6") von ungefähr 1 - 1,5 mm, beispielsweise ungefähr 1,2 mm, und einem Abstand am Austritt (6"') von ungefähr 0,8 - 1 mm, beispielsweise ungefähr 0,9 mm, befindet.

13. Vorrichtung nach einem der Ansprüche 1 bis 12, die ferner einen Dickdarmrechen (20) umfasst, der in Bezug auf den beweglichen Träger (4) gesehen auf der entgegengesetzten Seite der Fixiervorrichtung (3) angeordnet ist.

14. Abtrennstation (23) umfassend mindestens zwei Vorrichtungen (1) nach einem der Ansprüche 1 bis 13, wobei die Abtrennstation (23) eine Bedienerplattform (24) umfasst und wobei sich der Träger (4) und der Zug- und Vorschubmechanismus (9) spiegelbildlich auf den beiden Seiten der Bedienerplattform (24) gegenüberliegen.

15. Verwendung einer Vorrichtung (1) nach einem der Ansprüche 1 bis 12 zum Verarbeiten oder Messen von von Säugetieren stammenden Weichteilen wie Dünndärmen (Jejunum und Ileum).

16. Verfahren zum Abtrennen und Verarbeiten des Dünndarms (Jejunum und Ileum) von einer isolierten unverarbeiteten Menge aus Darm und Magen eines Säugetiers, das die folgenden Schritte umfasst:
a) Anordnen der Menge von abzutrennenden und zu verarbeitenden Innereien auf der Beschickungsfläche (2) einer Vorrichtung (1) nach einem der Ansprüche 1 bis 13 derart, dass die Menge von Innereien mit der Folge über die Kante der Beschickungsfläche (2) hinaus gezogen wird, dass der Dünndarm (27) zu dem Bediener (28) der Vorrichtung (1) hin und das Magenende von dem Bediener (28) weg weist,
b) Transportieren der Menge von Innereien unter einen beweglichen oberen Teil (12) einer Fixiervorrichtung (3) der Vorrichtung (1) und, wenn die Menge von Innereien richtig eingelegt ist, Betätigen des beweglichen oberen Teils (12) zum Fixieren des Magenendes des Dünndarms (27) an dem unteren Teil (11) der Fixiervorrichtung (3),
c) Durchschneiden und Trennen des Dünndarms (27) vom Magenende des Darms,
d) Transportieren des freien Endes des Dünndarms (27) von der Fixiervorrichtung (3) an einem Messerkopf (5) der Vorrichtung (1) vorbei zu einem Zug- und Vorschubmechanismus (9a) der Vorrichtung (1), wodurch der Vorgang des Abtrennens gestartet wird, und
e) Transportieren des freien Endes des abgetrennten Dünndarms zu einem Abwurfmechanismus (10) der Vorrichtung (1).

## Revendications

1. Appareil (1) de sectionnement d'intestin grêle (27) d'un ensemble isolé et non traité d'intestins et d'estomac d'un mammifère, l'appareil (1) comprenant :
- une surface de charge (2) ;
- un dispositif de fixation (3) agencé au niveau d'un bord (2') de ladite surface de charge (2) et destiné à fixer une première extrémité d'un intestin grêle (27) ;
- un mécanisme de déchargement (10) ;
- un mécanisme d'avancement par traction (9) pour tirer, depuis une position au niveau du dispositif de fixation (3), une seconde extrémité libre d'un intestin grêle vers le mécanisme de déchargement (10) ;
- et une tête de découpe (5), dans lequel la tête de découpe (5) et ledit mécanisme d'avancement par traction (9) sont prévus sur un châssis (4), de sorte que ladite tête de découpe (5) soit mobile au moins dans une direction s'approchant/s'éloignant du dispositif de fixation (3).

2. Appareil (1) selon la revendication 1, dans lequel ladite tête de découpe (5) comprend une paire de mâchoires (6) et un couteau rotatif.

3. Appareil (1) selon la revendication 1 ou 2, dans lequel ledit dispositif de fixation (3) comprend une partie inférieure stationnaire (11) et une partie supérieure mobile (12) coopérant avec la partie inférieure (11) et un actionneur destiné à presser la partie supérieure mobile (12) vers la partie inférieure (11).

4. Appareil selon la revendication 3, dans lequel des dentelures (13) sont prévues sur ladite partie supérieure mobile (12) sur une partie faisant face à ladite partie inférieure stationnaire (11).

5. Appareil selon l'une quelconque des revendications 1 à 4, dans lequel ledit châssis mobile (4) comprend un bras (15) agencé de façon sensiblement perpendiculaire au dispositif de fixation (3), ladite tête de découpe (5) étant agencée au niveau d'une extrémité dudit bras (15).

6. Appareil selon l'une quelconque des revendications 1 à 6, dans lequel ledit dispositif de fixation (3) est équipé d'un couteau pour désolidariser l'intestin grêle (27) de l'estomac.

7. Appareil selon l'une quelconque des revendications 1 à 6, dans lequel ladite tête de découpe (5) peut être déplacée pour s'approcher/s'éloigner dudit dispositif de fixation (3) par un moyen automatique ou semi-automatique.

8. Appareil selon la revendication 7, dans lequel ledit châssis mobile (4) est un bras télescopique (15) qui peut être déplacé par un actionneur (25) et dans lequel le bras télescopique (15) est monté sur un châssis stationnaire.

9. Appareil selon la revendication 8, dans lequel ledit bras télescopique (15) est incliné par rapport à l'horizontale et son extrémité libre est la plus haute et la plus proche du dispositif de fixation (3).

10. Appareil selon la revendication 8 ou 9, dans lequel le bras télescopique (15) peut tourner autour d'un axe sensiblement vertical du châssis stationnaire.

11. Appareil selon l'une quelconque des revendications 1 à 10, dans lequel ledit mécanisme d'avancement par traction (9) comprend deux roues dentées (17, 18) avec des axes de rotation parallèles, lesdites roues dentées (17, 18) étant en prise l'une avec l'autre et dans lequel la première roue dentée (17) est entraînée par un moteur (19) et dans lequel la seconde roue dentée (18) tourne librement ou inversement.

12. Appareil selon l'une quelconque des revendications 2 à 11, dans lequel il existe un espace (6') entre lesdites mâchoires (6) avec une distance dans l'entrée (6") d'environ 1-1,5 mm, par ex. environ 1,2 mm et une distance dans la sortie (6"') d'environ 0,8-1 mm, par ex. environ 0,9 mm.

13. Appareil selon l'une quelconque des revendications 1 à 12, comprenant en outre un râteau pour gros intestin (20) agencé sur le côté opposé du dispositif de fixation (3) observé par rapport au châssis mobile (4).

14. Poste de sectionnement (23) comprenant au moins deux appareils (1) selon l'une quelconque des revendications 1 à 13, dans lequel ledit poste de sectionnement (23) comprend une plateforme d'opérateur (24) et dans lequel le châssis (4) et les mécanismes d'avancement par traction (9) sont symétriquement opposés sur les deux côtés de ladite plateforme d'opérateur (24).

15. Utilisation d'un appareil (1) selon l'une quelconque des revendications 1 à 12 pour le traitement et la mesure de parties de tissus mous, telles que les intestins grêles (jéjunum et iléon) de mammifères.

16. Procédé de sectionnement et de traitement d'intestins grêles (jéjunum et iléon) d'un ensemble isolé et non traité d'intestins et d'estomac d'un mammifère, comprenant les étapes consistant à
a) agencer l'ensemble d'intestins à sectionner et traiter au niveau de la surface de charge (2) d'un appareil (1) selon l'une quelconque des revendications 1 à 13, de manière telle que l'ensemble d'intestins soit tiré sur le bord de la surface de charge (2) et au-delà de celui-ci, dans une mesure telle que l'intestin grêle (27) fasse face vers un opérateur (28) de l'appareil (1) et que l'extrémité côté estomac fasse face à l'opposé dudit opérateur (28),
b) transporter l'ensemble d'intestins sous une partie supérieure mobile (12) d'un dispositif de fixation (3) dudit appareil (1) et actionner, lorsque l'ensemble d'intestins est déployé correctement, la partie supérieure mobile (12) afin de fixer ladite extrémité côté estomac de l'intestin grêle (27) contre une partie inférieure (11) dudit dispositif de fixation (3),
c) sectionner et séparer ledit intestin grêle (27) de l'extrémité côté estomac de l'intestin,
d) transporter une extrémité libre de l'intestin grêle (27) depuis ledit dispositif de fixation (3) en passant devant une tête de découpe (5) dudit appareil (1) jusqu'à un mécanisme d'avancement par traction (9) de l'appareil (1), moyennant quoi la procédure de sectionnement est démarrée et
e) transporter l'extrémité libre de l'intestin grêle sectionné vers un mécanisme de déchargement (10) dudit appareil (1).
